(19) Europäisches Patentamt
European Patent Office
Office européen des brevets

(11) **EP 4 156 026 A1**

(12) **EUROPEAN PATENT APPLICATION**

(43) Date of publication:
**29.03.2023 Bulletin 2023/13**

(21) Application number: **21199018.9**

(22) Date of filing: **25.09.2021**

(51) International Patent Classification (IPC):
***G06N 3/04*** *(2006.01)*  ***G06N 3/08*** *(2006.01)*

(52) Cooperative Patent Classification (CPC):
**G06N 3/049; G06N 3/084**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität Bern**
**3012 Bern (CH)**

(72) Inventors:
• **Petrovici, Mihai A.**
  **3005 Bern (CH)**

• **Senn, Walter M.**
  **3014 Bern (CH)**
• **Jordan, Jakob J.**
  **3007 Bern (CH)**
• **Haider, Paul**
  **3007 Bern (CH)**
• **Ellenberger, Benjamin**
  **3700 Spiez (CH)**
• **Kriener, Laura M.**
  **8002 Zürich (CH)**

(74) Representative: **Vesterinen, Jussi Tapio et al**
**LUMI IP GmbH**
**Rodtmattstrasse 45**
**3014 Bern (CH)**

(54) **SIGNAL PROCESSING METHOD IN A NEURAL NETWORK**

(57)    The present invention concerns a method of processing signals in a neural network comprising a set of neurons interconnected by a set of synapses, with each neuron comprising a soma and a set of apical and/or basal dendrites. According to an embodiment, the method comprises: updating at least one synaptic input signal configured to be received at input nodes of one or more neurons; updating the corresponding basal potential of at least one of the basal dendrites; updating the corresponding apical potential of at least one of the apical dendrites; updating a potential differential for at least one neuron by using at least the updated apical and basal potentials; updating the somatic potential of at least one of the somas by using at least the corresponding updated potential differentials; updating the prospective potential of at least one neuron by using at least the corresponding updated somatic potentials and potential differentials; and generating a neuronal output signal for at least one neuron by using the corresponding updated prospective potentials. The method may further comprise updating prospective and/or membrane time constants, as well as synaptic weights for a subset of neurons using a subset of the above-mentioned variables.

Fig. 4a

From Fig. 4a

Update prospective and/or membrane time constants for a subset of neurons using their previous values and the difference between the prospective potentials and the sum of basal potentials and neuronal biases.    111

Update neuronal outputs as nonlinear functions of the prospective potentials.    113

Update synaptic weights and neuronal biases using their previous values, their local dendritic potentials and their neuron's somatic potentials and/or output.    115

End

**Fig. 4b**

**Description**

FIELD OF THE INVENTION

The present invention relates to a signal processing method in a neural network. The teachings of the present invention may be used to implement fast computation in physical substrates with slow components. The present invention also relates to a computer program product comprising instructions for implementing the steps of the method, as well as to a neural network configured to carry out the proposed method.

BACKGROUND OF THE INVENTION

Physical systems composed of large collections of simple, but intricately connected elements can exhibit powerful collective computational properties. Animals' nervous systems, and most prominently the human brain are prime examples. Its computational prowess has motivated a large, cross-disciplinary and ongoing endeavour to emulate aspects of its structure and dynamics in artificial substrates, with the aim of being ultimately able to replicate its function. The speed of information processing in such a system depends on the response time of its components; for neurons, for example, it can be the integration time scale determined by their membrane time constant.

If we consider hierarchically organised neural networks composed of such elements, each layer in the hierarchy causes a response lag with respect to a changing stimulus. This lag introduces two related critical issues. For one, the inference speed in these systems decreases with their depth. This in turn induces timing mismatches between instructive signals and neural activity, which disrupts learning. For example, recent proposals for bio-plausible implementations of error backpropagation (BP) in the brain require some form of relaxation, both for inference and during learning. Notably, this also affects some purely algorithmic methods involving auxiliary variables. To deal with this inherent property of physical dynamical systems, two approaches have been suggested: either phased plasticity that is active only following a certain relaxation period, or long stimulus presentation times with small learning rates. Both of these solutions entail significant drawbacks: the former is challenging to implement in asynchronous, distributed systems, such as cortical networks or neuromorphic hardware, while the latter results, by construction, in slow learning. This has prompted the critique that any algorithm requiring such a settling process is too slow to describe complex brain function, particularly when involving real-time responses. To the best of our knowledge this fundamental problem affects all modern models of approximate BP in biological substrates.

BRIEF DESCRIPTION OF THE INVENTION

The present invention aims to overcome at least some of the above-identified problems. More specifically, to overcome the above problems, it proposes a novel signal processing framework in neural networks that allows fast computation and learning in physical substrates with slow components.

According to a first aspect of the invention, a method of processing signals in a neural network is provided, as recited in claim 1.

The speed of information processing in physical systems depends crucially on the reaction speed of their microscopic components; for example, springs need time to decompress, or capacitors need time to charge. In analogue neuronal networks, both biological and bio-inspired/neuromorphic, neurons (which operate similarly to capacitors) need time to accumulate and react to stimuli. In many information processing scenarios, such as deep neuronal networks, input needs multiple stages of processing. This is usually achieved by consecutive layers of neurons, so at every stage of processing, the delays induced by "slow" neurons accumulate. This slows down inference and, much more problematically, disrupts learning. The present invention provides a framework that effectively alleviates this problem. We can endow neurons with a mechanism that speeds up their reaction by guessing their future state at any point in time. In principle, this allows arbitrarily slow neurons to respond arbitrarily quickly to inputs, making local information processing effectively instantaneous.

Note that we differentiate explicitly between the processing/computation speed of individual units (or neurons) and the communication speed between them. Our proposed method refers to the former. The latter is always finite and constrained by physics, i.e. by the speed with which signals can travel between units, which is ultimately limited by the speed of light.

In addition to the above-mentioned mechanism, two additional components are developed according to the present invention. The first one is a full microscopic (i.e., at the level of individual neurons and synapses) realisation of inference and learning using a network structure inspired by cortex that is amenable to extremely efficient implementation in neuromorphic hardware. The second is a way to alleviate the effects of substrate variability and temporal noise in analogue circuits by neuronal adaptation and synaptic filtering; both of these are local computations carried out by simple components. Such robustness to spatiotemporal noise is an important prerequisite for a viable realisation in silico.

The proposed solution also provides a biologically plausible approximation of BP in deep cortical networks with continuous-time, leaky neuronal dynamics and local, continuous plasticity. Moreover, the proposed model is easy to implement in both software and hardware and is well-suited for distributed, asynchronous systems.

In the proposed framework, inference can be arbitrarily fast (up to finite simulation resolution or finite communication speed across physical distances) despite a finite response time of individual system components; downstream responses to input changes thus become effectively instantaneous. Conversely, responses to instructive top-down input that generate local error signals are also near-instantaneous, thus effectively removing the need for any relaxation phase. This allows truly phase-free learning from signals that change on much faster time scales than the response speed of individual network components. Similarly to some other approaches, the present method derives neuron and synapse dynamics from a joint energy function. However, the energy function according to the present invention is designed to effectively disentangle these dynamics, thus removing the disruptive co-dependencies that otherwise arise during relaxation. This is achieved by introducing the simple, but important new ingredient: neuronal outputs that try to predict their future state based on their current information, a property that in the present description is described as "prospective". Thereby, the proposed framework also constructs an intimate relationship between such "slow" neuronal networks and artificial neural network (ANN), thus enabling the application of various auxiliary methods from deep learning. To differentiate between biologically plausible, leaky neurons and abstract neurons with instantaneous response, we respectively use the terms "neuronal" and "neural".

According to a second aspect of the invention, a computer program product is provided, comprising instructions for implementing the steps of the method according to the first aspect of the present invention when loaded and run on the computing means of an electronic device.

According to a third aspect of the invention, a neural network is provided, which is configured to implement the method according to the first aspect of the present invention.

Other aspects of the invention are recited in the dependent claims attached hereto.

BRIEF DESCRIPTION OF THE DRAWINGS

The invention will now be described in more detail with reference to the attached drawings, in which:

- Figure 1 schematically illustrates a neuron structure;

- Figure 2a shows a simple, functionally feedforward network of two neurons, illustrating also the recurrence induced by the propagation of both bottom-up signals and top-down errors;

- Figure 2b shows graphs illustrating neuronal firing rates ($r_{in}$, $r_1$, $r_2$) and membrane potentials ($u_1$, $u_2$) for an input sequence consisting of a quickly but smoothly changing stimulus followed by two constant stimuli, where dashed black lines denote instantaneous (relaxed) rates, while grey shading highlights the mismatch between instantaneous and actual firing rates that disrupts both inference and learning;

- Figure 2c illustrates continuous learning during relaxation without prospective coding in the network shown in Figure 2a, where the dotted black line in the upper graph shows the target membrane potential, and solid lines show trajectories for vanishing learning rates, while dashed lines show trajectories for nonzero learning rates (note the overshoot when learning is continuously active); in the bottom graph presynaptic weights of 1st/2nd neuron are shown;

- Figure 2d shows the same graphs as in Figure 2b, but when the teachings of the present invention have been applied, note the instantaneous reaction to input changes of the second neuron;

- Figure 3 shows a schematic of a cortical network model on the left side, and a more detailed view of a cortical microcircuit on the right side consisting of two pyramidal cells and one interneuron;

- Figures 4a and 4b show a flowchart illustrating the operation of an example artificial neural network according to the present invention;

- Figure 5 shows two pyramidal cells and one interneuron in a cortical microcircuit; and

- Figures 6a and 6b show a flowchart illustrating the operation of an example cortical microcircuit according to the present invention.

DETAILED DESCRIPTION OF THE INVENTION

It should be noted that the figures are provided merely as an aid to understanding the principles underlying the invention, and should not be taken as limiting the scope of protection sought. Where the same reference numbers are used in different figures, these are intended to indicate similar or corresponding features. It should not be assumed, however, that the use of different reference numbers is intended to indicate any particular degree of difference between the features to which they refer. As used herein, unless otherwise specified the use of the ordinal adjectives "first", "second", "third", etc. to describe a common object, merely indicate that different instances of like or different objects are being referred to, and are not intended to imply that the objects so described must be in a given sequence, either temporally, spatially, in ranking, or in any other manner.

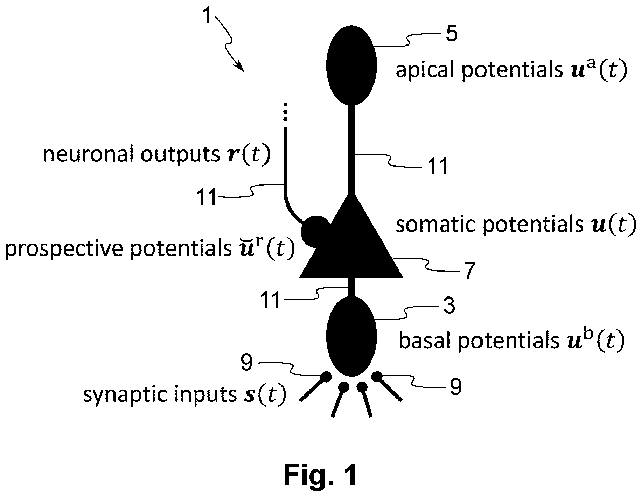

The teachings of the present invention may be implemented in a neural network comprising a set of neurons. An example neuron structure is illustrated in Figure 1. The neuron 1 as shown in Figure 1 consists of three compartments, namely a first compartment 3, which in in this example is a basal dendrite, a second compartment 5, which in this example is an apical dendrite, and a third compartment 7, which in this example is a somatic compartment, and which is configured to integrate dendritic information and to generate the neuronal output signal r(t). In operation, the basal dendrite is characterised by its basal potential $u^b(t)$, the apical dendrite is characterised by its apical potential $u^a(t)$, and the somatic compartment is characterised by its somatic potential u(t). As explained later in more detail, according to the present invention the neuron can be characterised by its prospective potential $\breve{u}^r(t)$. In this example, the basal dendrite is configured to receive synaptic input signal s(t) through synapses 9, which are characterised by their weights w. The first, second and third compartments are connected to each other by transmission lines 11 as shown in Figure 1.

Problems of slow components

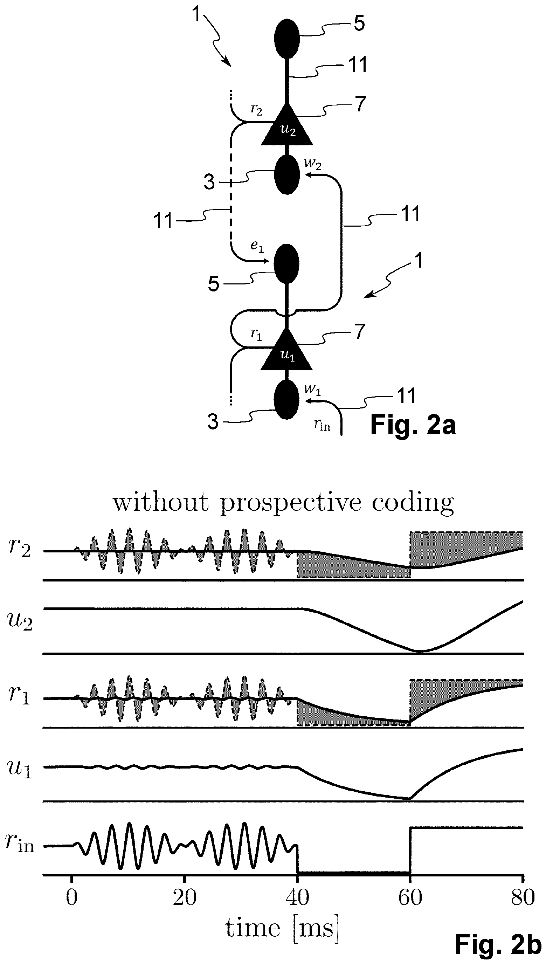

To illustrate the issue with relaxation, we consider a simple network of two model neurons arranged in a chain as shown in Figure 2a. Biological neuronal membrane potentials u are conventionally modelled as leaky integrators of their input $I$: $C_m \dot{u} = -g_1 u - I$, where the membrane capacitance $C_m$ and leak conductance $g_1$ determine the membrane time constant $\tau^m := C_m/g_1$ and thereby its response speed. These dynamics attenuate and delay input, resulting in significant differences between neuronal output rates and those expected in an instantaneous system (Figure 2b). This mismatch increases with every additional layer; a feedforward network with $n$ layers thus has an effective relaxation time constant of approximately $n\tau^m$.

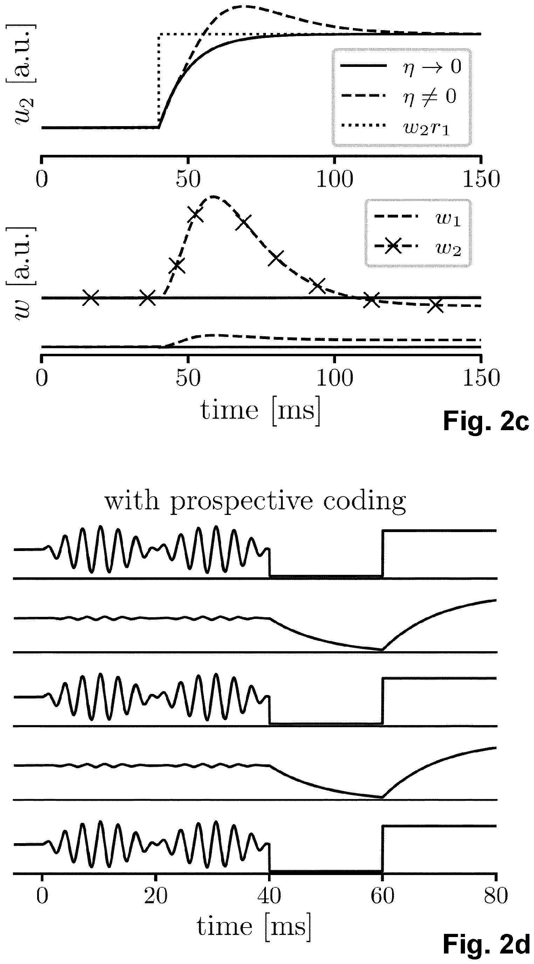

Besides slow inference, this delayed response leads to critical issues during learning from downstream instructive signals. Consider the typical scenario where such a target signal is present in the output layer and plasticity is continuously active (and not phased according to some complicated schedule). If the system fulfils its task correctly, the target signal corresponds to the output of the relaxed system and no learning should take place. However, due to delays in neuronal responses, the output signal differs from the target during relaxation, which causes plasticity to adapt synaptic weights in an effort to better match the target. As a result, the system "overshoots" during early relaxation and has to undo these synaptic changes through further learning in the late relaxation phase (Figure 2c). Also, since output errors need inputs to propagate forward through the entire network before propagating backwards themselves, the input layer only observes correct errors after about $2 n\tau^m$. This issue is referred to as the "relaxation problem". In the following, a solution is presented for this problem, combining prospective neuron dynamics with continuously active, local synaptic plasticity.

Fast computations in slow substrates

Inspired by the canonical coordinates from classical mechanics, we describe the state of a neuronal network by its position in phase space (u, $\dot{u}$), with the generalised position $u$ and the generalised momentum $\dot{u}$. The relation between these two components describes the physics of the system. To obtain the leaky integrator dynamics that characterise biological neurons, we first define the abstract network state $\breve{u}^m$ as

$$\breve{u}^m := u + \tau^m \dot{u} \, . \qquad (1)$$

We next define an energy function E that characterises this state:

$$E(\breve{u}^m) := \frac{1}{2} \|\breve{u}^m - W\varphi(\breve{u}^m) - b\|^2 + \beta\mathcal{L}(\breve{u}^m) \, . \qquad (2)$$

This energy represents a global view of the network from which neuron and weight dynamics will be derived. Here, **W** and **b** represent the weight matrix and bias vector, respectively, $\varphi$ is the neuronal activation function and the loss $\mathcal{L}$ is scaled by a constant β. Bold font is used for matrices, vectors, and vector-valued functions. This formulation of the energy function is very generic and can, by appropriate choice of parameters, apply to different network topologies, including multilayer perceptrons, convolutional or recurrent networks. It is to ne noted that this energy can be written as a neuron-wise sum over mismatch energies

$$E_i\big(\breve{u}_i^{\mathrm{m}}, \boldsymbol{r}_{i,\mathrm{pre}}\big) = \tfrac{1}{2}\big(\breve{u}_i^{\mathrm{m}} - \boldsymbol{W}_i \boldsymbol{r}_{i,\mathrm{pre}} - b_i\big)^2,$$

where

$$\boldsymbol{r}_{i,\mathrm{pre}} := \boldsymbol{\varphi}(\breve{u}_{i,\mathrm{pre}}^{\mathrm{m}})$$

is the presynaptic input vector for the ith neuron in the network.

We can now derive neuronal dynamics as extrema of the energy function from Equation 2:

$$\nabla_{\tilde{u}^m} E = 0 \Rightarrow \tau^{\mathrm{m}}\dot{\boldsymbol{u}} = -\boldsymbol{u} + \boldsymbol{W}\boldsymbol{\varphi}(\breve{u}^{\mathrm{m}}) + \boldsymbol{b} + \boldsymbol{e}\,, \qquad (3)$$

with presynaptic bottom-up input $\boldsymbol{W}\varphi(\breve{\boldsymbol{u}}^{\mathrm{m}})$ and top-down error signals

$$\boldsymbol{e} = \boldsymbol{\varphi}'(\breve{u}^{\mathrm{m}})\boldsymbol{W}^{\mathrm{T}}[\breve{u}^{\mathrm{m}} - \boldsymbol{W}\boldsymbol{\varphi}(\breve{u}^{\mathrm{m}}) - \boldsymbol{b}] \qquad (4)$$

for hidden neurons, and $\boldsymbol{e} = -\beta\nabla_{\tilde{u}^{\mathrm{m}}}\mathcal{L}$ for neurons which directly contribute to the loss. Using Equation 3, it is easy to see that in hierarchical networks these errors can be expressed recursively over layers $\ell$,

$$e_\ell = \boldsymbol{\varphi}'(\breve{u}^{\mathrm{m}})\boldsymbol{W}_{\ell+1}^{\mathrm{T}}\boldsymbol{e}_{\ell+1},$$

thus instantiating a variant of BP. Equation 3 can be interpreted as the dynamics of a structured pyramidal neuron receiving presynaptic, bottom-up input via its basal dendrites and top-down input via its apical tree. We later provide a more detailed description of our model's biophysical implementation. We note that the proposed approach contrasts with previous work that introduced neuron dynamics via gradient descent on an energy function. Indeed, this difference is crucial for solving the relaxation problem, as discussed below. Since for a given input our network moves, by construction, within a constant-energy manifold, we refer to our model as latent equilibrium (LE).

We can now revisit our choice of $\breve{u}^{\mathrm{m}}$ from a functional point of view. Instead of the classical output rate $\varphi(u)$, our neurons fire with $\varphi(\breve{u}^{\mathrm{m}})$, which depends on both $u$ and u (Equation 1). This represents a known, though often neglected feature of biological neurons and has also been considered in other models of bio-plausible BP derived from a stationary action. As neuron membranes are low-pass filters (Equation 3), $\breve{\boldsymbol{u}}^{\mathrm{m}}$ can be viewed as a prospective version of u: when firing, the neuron tries to look into the future and predict the state of its membrane potential after relaxation. The prospective nature of $\breve{\boldsymbol{u}}^{\mathrm{m}}$ also holds in a strict mathematical sense: the breve operator $^{\mathrm{m}} := (1 + \tau^{\mathrm{m}}d/dt)$ is the exact inverse of an exponential low-pass filter. While neuronal membranes continue to relax slowly towards their steady states, neuronal outputs use membrane momenta to compute a correct instantaneous reaction to their inputs, even in the case of jumps (Figure 2d). Thus, information can propagate instantaneously throughout the network, similarly to an ANN, counterintuitively even when membrane dynamics are never in equilibrium. The activity of the output layer hence reflects arbitrarily fast changes in the input - even on time scales smaller than the neuronal time constant $\tau^{\mathrm{m}}$ — rather than responding with a significant time lag and attenuation as in previous, gradient-based models.

It is to be noted that, even for functionally feedforward networks, our resulting network structure is recurrent, with backward coupling induced by error inputs to the apical tree. As a non-linear recurrent network, it cannot settle instantaneously into the correct state; rather, in numerical simulations, it jumps quickly towards an estimated stationary activity state and reaches equilibrium within several such jumps (of infinitesimal duration). In practice, saturating activation functions can help avoid pathological behaviour under strong coupling. Moreover, we can introduce a very short exponential low-pass filter $\tau^s$ on top-down signals, slightly larger than the temporal resolution of the simulation. Thus, in physical systems operating in continuous time, $\tau^s$ can effectively become infinitesimal as well and does not affect the speed of information propagation through the network. In particular, as explained below, the perpetual consistency between input and output allows our model to continuously learn to reduce the loss, obviating the need for network relaxation phases and the associated global control of precisely timed plasticity mechanisms.

Fast learning in slow substrates

Based on our prospective energy function (Equation 2), we define synaptic weight dynamics, i.e., learning, as time-continuous stochastic gradient descent with learning rate $\eta_W$:

$$\dot{W} \propto -\nabla_W E \Longrightarrow \dot{W} = \eta_W [\breve{u}^{\mathrm{m}} - Wr - b]r^{\mathrm{T}}. \tag{5}$$

Thus, weights evolve continuously in time driven by local error signals without requiring any particular schedule. Neuronal biases are adapted according to the same principle. It is to be noted that this rule only uses quantities that are available at the locus of the synapse (as also explained later). Intuitively, this locality is enabled by the recurrent nature of the network: errors in the output units spread throughout the system, attributing credit locally through changes in neuronal membrane potentials. These changes are then used by synapses to update their weight in order to reduce the network loss. However, our learning rule is not an exact replica of BP, although it does approximate it in the limit of infinitely weak supervision $\beta \to 0$ (often referred to as "nudging"); strictly speaking, it minimises the energy function E, which implicitly minimises the loss $\mathcal{L}$. This form of credit assignment can be related to previous models which similarly avoid a separate artificial backward pass (as necessary in classical BP) by allowing errors to influence neuronal activity. Plasticity in the weights projecting to output neurons depends on the choice of $\mathcal{L}$; for example, for an $L^2$ loss, plasticity in the output layer corresponds to the classical delta rule: $\dot{W}_N = -\eta\beta[r_N^* - r_N]r_{N-1}^{\mathrm{T}}$.

Despite similarities to previous work, learning in our framework does not suffer from many of the shortcomings noted above. Since activity propagates quasi-instantaneously throughout the network, our plasticity can be continuously active without disrupting learning performance. This is true by construction and most easily visualised for a sequence of (piecewise constant) input patterns: following a change in the input, membrane dynamics take place in a constant-energy manifold (Equation 3) across which synaptic weight dynamics remain unchanged, i.e., they equally and simultaneously pull downwards on all points of this manifold. This disentangling of membrane and synaptic weight dynamics constitutes an important difference to previous work, where the neuronal mismatch energies $E_i$ change as dynamics evolve and thus cannot represent the true errors in the network before reaching a fixed point. We further note that LE also alleviates a second form of catastrophic forgetting in these other models: due to the misrepresentation of errors during relaxation, continuous learning changes synaptic weights even in perfectly trained networks (Figure 2c).

Fast computation and learning in cortical microcircuits

An example physical implementation of the proposed system is explained in the following. Due to the simplicity of their implementation, the principles of LE can be applied to models of approximate BP in the brain in order to alleviate the issues discussed above. Here we demonstrate how a network of hierarchically organised dendritic microcircuits can make use of our theoretical advances to significantly increase both inference and training speed, thus removing several critical shortcomings towards its viability as a scalable model of cortical processing. The resulting dynamical system represents a detailed and biologically plausible version of BP, with real-time dynamics, and phase-free, continual local learning able to operate on effectively arbitrary sensory timescales.

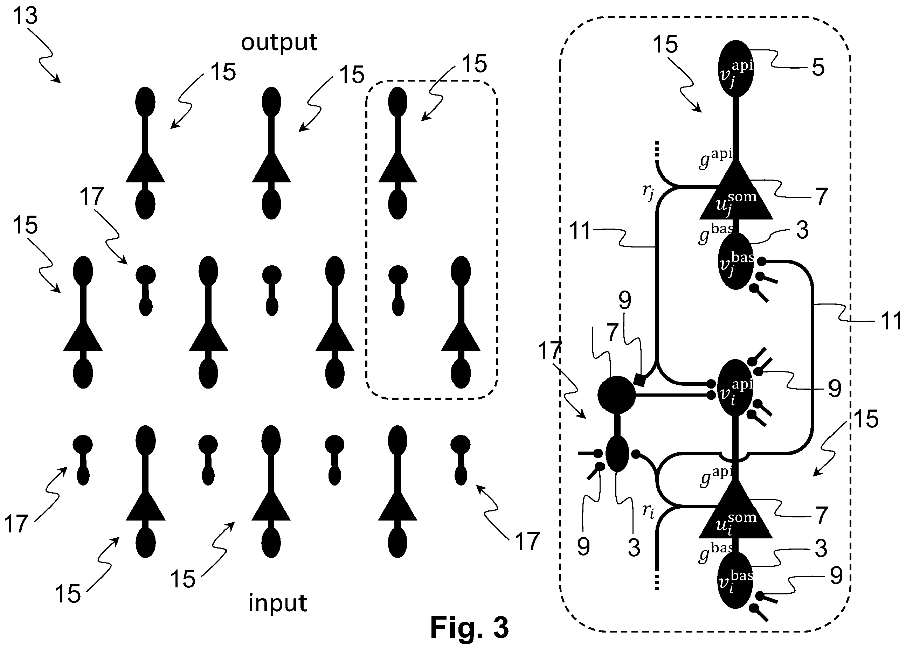

The fundamental building block of the neural network 13 is a cortical microcircuit model consisting of pyramidal cells 15 or neurons and interneurons 17 as shown in Figure 3. The microcircuit is shown on the right in Figure 3 in a more detailed manner, and the entire network, consisting of microcircuits, is on the left. Pyramidal cells 15 consist of three compartments: a basal dendrite 3 receiving bottom-up input from lower areas, an apical dendrite 5 receiving top-down input from higher areas and lateral input from interneurons 17, and a somatic compartment 7 that integrates dendritic information and generates the neuronal output. Interneurons 17 consist of two compartments: a basal dendrite 3 receiving input from pyramidal cells 15 in the same layer, and a somatic compartment 7 that receives input from pyramidal cells 15 in higher layers. The pyramidal cells are thus three-compartment neurons, while the interneurons are two-compartment neurons. Pyramidal somatic compartments 7 are leaky integrators of input from neighbouring compartments:

$$C_{\mathrm{m}}\dot{u}_i^{\mathrm{som}} = g_{\mathrm{l}}(E_{\mathrm{l}} - u_i^{\mathrm{som}}) + g^{\mathrm{bas}}(v_i^{\mathrm{bas}} - u_i^{\mathrm{som}}) + g^{\mathrm{api}}(v_i^{\mathrm{api}} - u_i^{\mathrm{som}}), \quad (6)$$

where $i$ is the neuron index, $E_1$ the leak potential, $v_i^{\mathrm{bas}}$ and $v_i^{\mathrm{api}}$ the basal and apical membrane potentials, respectively, and $g^{\mathrm{bas}}$ and $g^{\mathrm{api}}$ the dendro-somatic couplings. Due to the conductance-based interaction between compartments, the effective time constant of the soma is $\tau^{\mathrm{s}} := C_{\mathrm{m}}/(g_1 + g^{\mathrm{bas}} + g^{\mathrm{api}})$. For somatic membrane potentials, assuming that apical dendrites encode errors (see below) and basal dendrites represent the input, this corresponds directly to Equation 3. Plasticity in basal synapses is driven by the local error signal given by the discrepancy between somatic and dendric membrane potentials $u_i^{\mathrm{som}}$ and $v_i^{\mathrm{bas}}$:

$$\dot{\omega}_{ij} = \eta_{\mathrm{w}}\left[\varphi(u_i^{\mathrm{som}}) - \varphi(\alpha v_i^{\mathrm{bas}})\right]\varphi(u_j^{\mathrm{som}}), \qquad (7)$$

which is analogous to Equation 5 up to a monotonic transformation on the voltages.

In this architecture, plasticity serves two purposes. For pyramidal-to-pyramidal feedforward synapses 9, it implements error-correcting learning as a time-continuous approximation of BP. For pyramidal-to-interneuron synapses 9, it drives interneurons 17 to mimic their pyramidal partners 15 in the layers above. Thus, in a well-trained network, apical compartments 5 of pyramidal cells 17 are at rest, reflecting zero error, as top-down and lateral inputs cancel out. When an output error propagates through the network 13, these two inputs can no longer cancel out and their difference represents the local error $e_i$. This architecture does not rely on the transpose of the forward weight matrix, improving viability for implementation in distributed asynchronous systems. Here, we keep feedback weights fixed, realising a variant of feedback alignment. In principle, these weights could also be learned in order to further improve the local representation of errors.

Incorporating the principles of LE is straightforward and requires only that neurons fire prospectively: $\varphi(u) \rightarrow \varphi(\breve{u}^{\mathrm{eff}})$. While we have already addressed the evidence for prospective neuronal activity, we note that our plasticity also uses these prospective signals, which constitutes an interesting prediction for future in-vivo experiments.

The proposed microcircuit model can learn perfect classification even for very short presentation times. In contrast, traditional models without the prospective mechanism stagnate at high error rates even for this simple task. This can be traced back to the learning process being disrupted during relaxation. Without prospective dynamics, traditional models require presentation times on the order of $100\,\tau^{\mathrm{eff}}$ to achieve perfect accuracy. In contrast, LE only degrades for presentation times below $0.1\,\tau^{\mathrm{eff}}$, which is due to the limited resolution of our numerical integration method. Thus, incorporating LE into cortical microcircuits can bring the required presentation times into biologically plausible regimes, allowing networks to deal with rich sensory data.

Robustness to substrate imperfections

Computer simulations often assume perfectly homogeneous parameters across the network. Models can hence inadvertently rely on this homogeneity, resulting in unpredictable behaviour and possibly fatal dysfunction when faced with the physics of analogue substrates which are characterised by both heterogeneity in their components as well as temporal perturbation of their dynamics. Therefore, we consider robustness to spatio-temporal noise to represent a necessary prerequisite for any mathematical model aspiring to physical implementation, be it biological or artificial.

Spatial noise reflects the individuality of cortical neurons or the heterogeneity arising from device mismatch in hardware. Here, we focus on the heterogeneity of time constants; in contrast to, for example, variability in synaptic parameters or activation functions, these variations cannot be "trained away" by adapting synaptic weights. The two time constants that govern neuron dynamics in our model, namely integration (Equation 3) and prospective coding (Equation 1), previously assumed to be identical, are affected independently by such variability. To differentiate between the two, we assign the prospective dynamics their own time constant: $\breve{u}^{\mathrm{r}} := u + \tau^{\mathrm{r}}\dot{u}$. We can now model heterogeneity as independent, multiplicative Gaussian noise on all time constants: $\tau^{\mathrm{m/r}} \rightarrow (1 + \xi)\tau^{\mathrm{m/r}}$, with $\xi \sim \mathcal{N}(0, \sigma_\tau^2)$; we use multiplicative noise to emphasise that our model is agnostic to absolute time scales, so only relative relationships between specific time constants matter.

Due to the resulting mismatches between the timing of neuronal input and output, neuronal outputs suffer from exponential transients, leading to relaxation issues similar to the ones we already addressed in detail. However, depending on the transmission of top-down signals, the effects on learning performance can be very different. According to the formal theory, backward errors use the correct prospective voltages:

$$e \propto [\breve{u}^{m} - W\varphi(\breve{u}^{r})]$$

(Equations 4 and 5); this allows robust learning even for relatively large perturbations in the forward signals. In contrast, in biophysical implementations such as the microcircuits discussed above, neurons can only transmit a single output signal

$$\varphi(\breve{u}_{i}^{r}),$$

which consequently also affects the errors:

$$e \propto$$

$$[\breve{u}^{r} - W\varphi(\breve{u}^{r})].$$

Since deviations due to a mismatch between integration and prospective time constants persist on the time scale of $\tau^{m}$, even small amounts of mismatch can lead to a significant loss in performance.

Here we address this issue by introducing a neuron-local adaptation mechanism that corrects the difference between prospective voltages $\breve{u}^{m}$ and $\breve{u}^{r}$ induced by mismatching time constants:

$$\dot{\tau}^{m} = \eta_{\tau}(\breve{u}^{r} - Wr - b)\dot{u}. \qquad (8)$$

In biological substrates, this could, for example, correspond to an adaptation of the transmembrane ion channel densities, whereas on many neuromorphic substrates, neuronal time constants can be adapted individually. Before training the network, we allow it to go through a "developmental phase" in which individual neurons are not affected by top-down errors and learn to match their prospective firing to their membrane dynamics, thus recovering the performance of networks with perfectly matched time constants. This developmental phase merely consists of presenting input samples to the network, for a duration that depends on the required matching precision. Here, we achieved mismatches below 1 ‰ within the equivalent of 20 training epochs. It is to be noted that, as observed, for example, in vivo, neuronal time constants remain diverse after this phase, but are matched in a way that enables fast reaction of downstream areas to sensory stimuli - an ability that is certainly helpful for survival.

We next model additive temporal noise on neuronal outputs as might be induced, for example, by noisy transmission channels: r → r + ξ, with $\xi \sim \mathcal{N}(0, \sigma_{r}^{2})$ . Formally, this turns membrane dynamics into a Langevin process. These perturbations add up over consecutive layers and can also accumulate over time due to recurrent interactions in the network. This introduces noise to the weight updates that can impair learning performance. Due to their slow integration of inputs, traditional neuron models filter out this noise, but our prospective mechanism effectively removes this filter. We thus optionally use an additional denoising mechanism, for which we again turn to biology: by introducing synaptic filtering with a short time constant $\tau^{s}$, synaptic input is denoised before reaching the membrane; formally, $r = \varphi(\breve{u}^{m})$ is replaced by a low-pass-filtered $\bar{r}^{s}$ in the energy function (Equation 2). This narrow filter also mitigates possible numerical instabilities, as discussed in Section "Fast computation in slow substrates".

Networks equipped with synaptic filters learn reliably even in the presence of significant noise levels. However, introducing this filter affects the quasi-instantaneity of computation in our networks, which then require longer input presentation times in the presence of synaptic filtering. Even so, these presentation times need only be "long" with respect to the characteristic time constant of relaxation mismatches - in this case, $\tau^{s}$. Thus, for the typical scenario of white noise described above, minuscule $\tau^{s}$ on and even below biological time scales can achieve effective denoising, without significantly affecting the advantages conferred by prospective coding. In conclusion, the demonstrated robustness of our model (to spatial and temporal substrate imperfections) introduced by simple, biologically inspired mechanisms, make it a promising candidate for implementation in analogue physical systems.

A new framework was introduced above for inference and learning in physical systems composed of computational elements with finite response times. Our model rests on four simple axioms: prospective coding (Equation 1), neuronal mismatch energy (Equation 2), energy conservation under neuronal dynamics (Equation 3) and gradient descent on the energy under synaptic plasticity (Equation 5). In particular, incorporating the simple, biologically inspired mechanism of prospective coding allows us to avoid critical issues and scalability bottlenecks inherent to many current models of approximate BP in cortex. Furthermore, the resulting implementations can be made robust to substrate imperfections, a prerequisite for deployment in analogue neuronal systems, both biological and artificial.

Our framework carries implications both for neuroscience and for the design of neuromorphic hardware. The prospective mechanism described here would allow biological circuits to respond much faster than previously assumed. Furthermore, our framework suggests that both inference and learning take place on prospective, rather than instantaneous neuronal quantities. From a hardware perspective, this lifts the previously perceived limitations of slow analogue components (as compared to digital ones) without relinquishing their power efficiency.

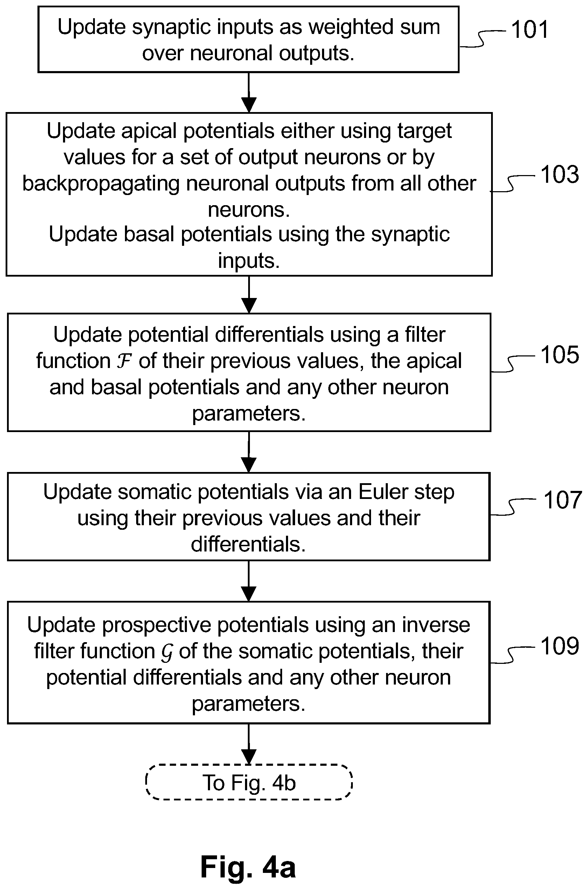

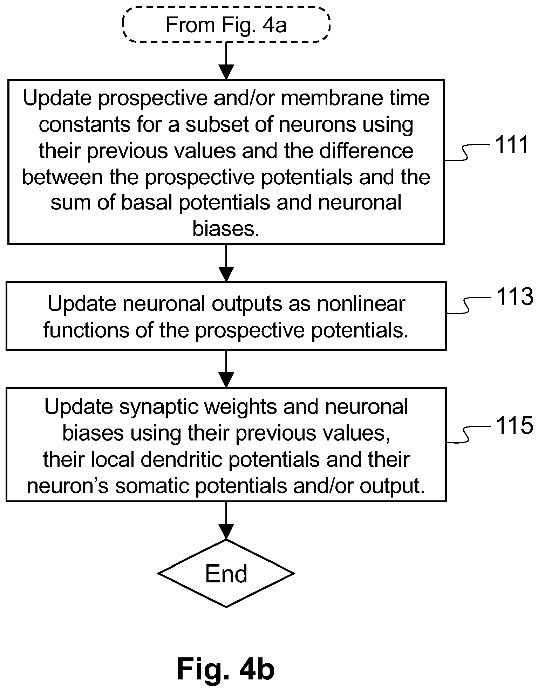

The flowchart of Figures 4a and 4b summarises the method of processing signals according to a generic concept in a neural network comprising a set of neurons 1 interconnected by a set of synapses 9, where a neuron 1 comprises a basal dendrite 3, a soma 7, and an apical dendrite 5. In this example, the method steps are carried out for each time t (with time steps $\Delta t$), and the operations in a given step are carried out for all neurons $k$ from 1 to $N$. The operations in a given step can be carried out sequentially or in parallel. In the equations below, "·" and "/" denote component-wise products and divisions.

In step 101, the synaptic inputs (i.e. the synaptic input signals) are updated, i.e. $s(t) \leftarrow W(t - \Delta t)r(t - \Delta t)$. In other words, the synaptic inputs are updated so that they become equal to a weighted sum over neuronal outputs (i.e. neuronal output signals). Thus, these updated synaptic inputs for a given neuron depend on a synaptic weight vector multiplied by a corresponding presynaptic signal vector. Optionally, if in this step a synaptic filter is applied e.g. according to the teachings of section "Robustness to substrate imperfections", then $s(t) \leftarrow (\tau^s)^{-1} \cdot [-s(t - \Delta t) + W(t - \Delta t)r(t - \Delta t)]$. Multiple operations in this step can be carried out in parallel. It is to be noted that when a signal, an item or any value more generally is updated, the outcome is an updated signal, item or value even if this is not explicitly stated in this context.

In step 103, apical and basal potentials of the neurons 1 are updated. More specifically, the apical potentials are updated either using target values for a set of output neurons or by backpropagating the neuronal outputs from all other neurons. The basal potentials are updated using the updated synaptic inputs. In other words, $u^a(t) \leftarrow e^{tgt}(t)$ if $k \in 0$, where tgt denotes the target, $0$ denotes the set of output neurons, and $u^a(t) \leftarrow \varphi'(\breve{u}^r(t - \Delta t)) \cdot W^T(t - \Delta t) [u^r(t - \Delta t) - s(t)]$ otherwise, and $u^b(t) \leftarrow s(t)$. Multiple operations in this step can be carried out in parallel. One apical potential and one basal potential are updated per neuron. It is to be noted that the teachings of the present invention are also applicable even if only one or two of the three update processes takes place in steps 101 and 103.

In step 105, potential differentials of the neurons 1 are updated (one potential differential per neuron). More specifically, potential differentials are updated using a filter function $\mathcal{F}$ of their previous values, the apical and basal potentials and optionally any other neuron parameters. In other words, $\Delta u(t) \leftarrow F(u(t - \Delta t), u^a(t), u^b(t) \mid W(t - \Delta t), b(t - \Delta t), \tau^m(t - \Delta t), ... )$. If no apical and/or basal potentials are updated in step 103, then the respective potential differential is updated by using at least a respective updated synaptic input signal.

In step 107, somatic potentials of the neurons 1 (one somatic potential per somatic compartment, i.e. per neuron) are updated. More specifically, the somatic potentials are updated via an Euler step using their previous values and their differential, in other words $u(t) \leftarrow u(t - \Delta t) + \Delta t \Delta u(t)$. Multiple operations in this step can be carried out in parallel.

In step 109, prospective potentials of the neurons (one prospective potential per neuron) are updated, which is also one of the main contributions of the present invention. More specifically, the prospective potentials are updated using an inverse filter function $\mathcal{G}$ of the somatic potentials, their potential differentials and optionally any other neuron parameters. This means that $\breve{u}^r(t) \leftarrow \mathcal{G}(u(t), \Delta u(t) \mid \tau^r(t - \Delta t), ...)$.

Then optionally in step 111 and before training, time constants are updated for a subset of neurons or all of the neurons. More specifically, prospective and/or membrane time constants for a subset of neurons are updated using their previous values and the difference between the prospective potentials and the sum of basal potentials and neuronal biases. In other words, for membrane time constants $\tau^m(t) \leftarrow \tau^m(t - \Delta t) + \Delta t \eta_\tau \cdot [\breve{u}^r(t) - u^b(t) - b(t - \Delta t)]$, and for prospective time constants $\tau^r(t) \leftarrow \tau^r(t - \Delta t) - \Delta t \eta_\tau \cdot [\breve{u}^r(t) - u^b(t) - b(t - \Delta t)]$. One aim would be to make the time constants $\tau^m(t)$ and $\tau^r(t)$ equal or substantially equal. Multiple operations in this step can be carried out in parallel.

In step 113, neuronal outputs (in this example one output signal per neuron) are updated. More specifically, neuronal outputs are updated as nonlinear functions of the prospective potentials. Accordingly, in this step, $r(t) \leftarrow \varphi(\breve{u}^r(t))$. Multiple operations in this step can be carried out in parallel.

As soon as the above steps have been carried out for all the neurons or for the desired number of neurons, then the process can be terminated. Optionally, the process may be continued so that in step 115 synaptic plasticity is implemented. More specifically, the synaptic weights (one weight per synapse) and neuronal biases (one bias per neuron) are updated using their previous values, their local dendritic potentials and their neuron's somatic potentials and/or output. For example, the synaptic weights can now be updated during training as follows: $W(t) \leftarrow W(t - \Delta t) + \Delta t\, \eta_W \cdot u^a(t)\, r^T(t)$ (the apical potential being the difference between the somatic and the basal potentials). Similarly, the neuronal biases can now be updated during training: $b(t) \leftarrow b(t - \Delta t) + \Delta t\, \eta_b \cdot u^a(t)$. Multiple operations in this step can be carried out in parallel.

The flowchart of Figures 4a and 4b illustrate a generic scenario for implementing the teachings of the present invention. According to a first special case, the network uses leaky integrators. In this case, step 105, where the potential differentials are updated, can be written as $\Delta u(t) \leftarrow [\tau^m(t - \Delta t)]^{-1} \cdot [-u(t - \Delta t) + u^b(t) + u^a(t) + b(t - \Delta t)]$, while step 109, where the prospective potentials are updated, can we written as $u^r(t) \leftarrow u(t) + \tau^r(t - \Delta t) \cdot \Delta u(t)$, which corresponds to Equation 1 assuming $\tau^r$ equals $\tau^m$.

According to a second special case, the network uses harmonic oscillators. In this case, step 105 can be divided into two sub-steps. More specifically, first 2nd order potential differentials are updated: $\Delta^2 u(t) \leftarrow -ku(t - \Delta t) + u^b(t) + u^a(t) + b(t - \Delta t)$. Subsequently, 1st order potential differentials are updated: $\Delta u(t) \leftarrow \Delta u(t - \Delta t) + \Delta t\, \Delta^2 u(t)$. According to the second special case, the prospective potentials are updated in step 109 in the following manner: $u^r(t) \leftarrow k \cdot u(t) + \Delta^2 u(t)$.

According to a third special case, the network uses neuronal cables. According to this case, the potential differentials are updated in step 105 as follows: $\Delta u(t) \leftarrow [\tau^m(t - \Delta t)]^{-1} \cdot [-u(t - \Delta t) + u^b(t) + u^a(t) + b(t - \Delta t) - \lambda i^m(t)]$. Furthermore, according to the third special case, the prospective potentials are updated in step 109 as follows: $u^r(t) \leftarrow u(t) + \tau^r(t - \Delta t) \cdot \Delta u(t) - \lambda i^m(t)$.

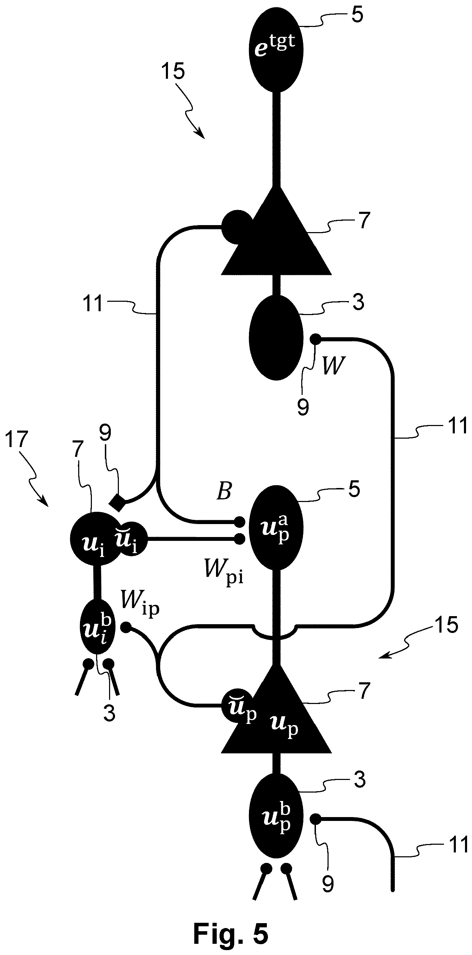

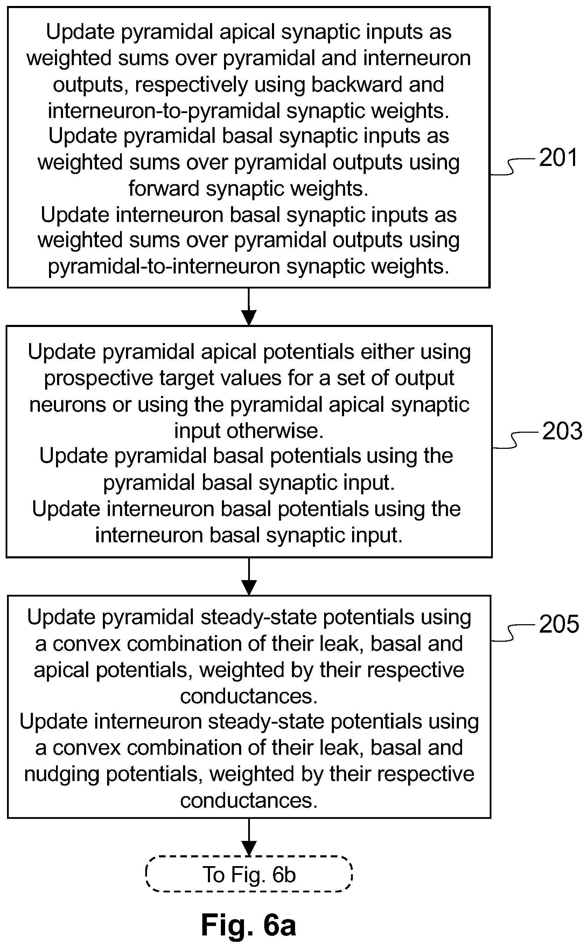

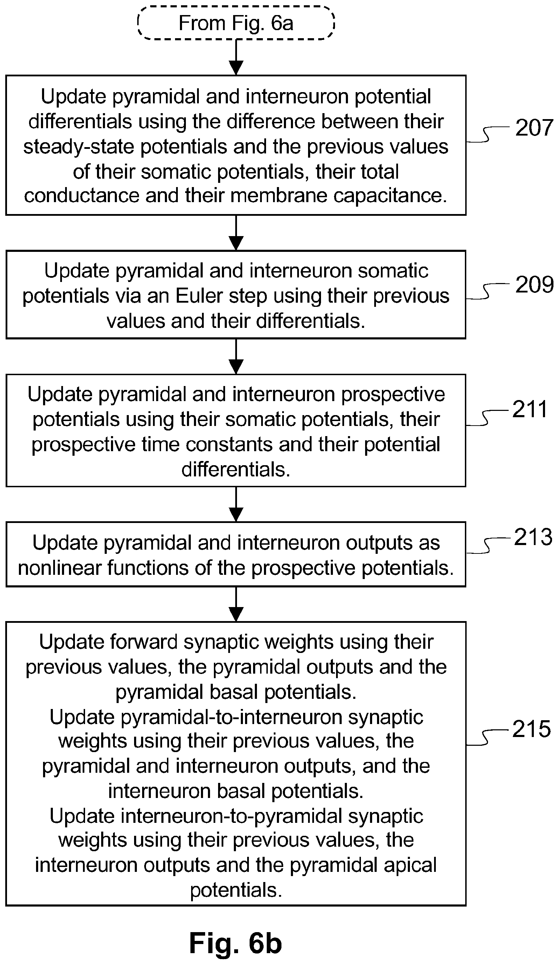

An example process of running the proposed method in a cortical microcircuit is next explained in more detail with reference to Figure 5 and the flowchart of Figures 6a and 6b. In this example, the steps are carried out for each time t (with time steps $\Delta t$), and the operations in a given step are carried out for all neurons $k$ from 1 to $N$. The operations in a given step can be carried out sequentially or at least some of them can be carried out in parallel. In step 201, synaptic inputs are updated. More specifically, pyramidal apical synaptic inputs are updated as weighted sums over pyramidal and interneuron outputs, respectively using the backward and interneuron-to-pyramidal synaptic weights,

$$s_p^a(t) \leftarrow W_{pi}(t - \Delta t)\, r_i(t - \Delta t) + B r_p(t - \Delta t)$$

. Pyramidal basal synaptic inputs are updated as weighted sums over pyramidal outputs using the forward synaptic weights, $s_p^b(t) \leftarrow W(t - \Delta t)\, r_p(t - \Delta t)$ . Interneuron basal synaptic inputs are updated as weighted sums over pyramidal outputs using the pyramidal-to-interneuron synaptic weights,

$$s_i^b(t) \leftarrow W_{ip}(t - \Delta t) r_p(t - \Delta t)$$

. Multiple operations in this step can be carried out in parallel.

In step 203, dendritic potentials (one potential per compartment) are updated. More specifically, pyramidal apical potentials are updated either using prospective target values for a set of output neurons or using the pyramidal apical synaptic input otherwise, $u_p^a(t) \leftarrow \breve{u}_{tgt}^r(t)$ if $k \in 0$, where $0$ denotes the set of output neurons, $u_p^a(t) \leftarrow s_p^a(t)$ otherwise. Pyramidal basal potentials are updated using the pyramidal basal synaptic input, $u_p^b(t) \leftarrow s_p^b(t)$ . Interneuron basal potentials are updated using the interneuron basal synaptic input, $u_i^b(t) \leftarrow s_i^b(t)$ . Multiple operations in this step can be carried out in parallel.

In step 205, steady-state potentials (one steady-state potential per neuron) are updated. More specifically, pyramidal steady-state potentials are updated using a convex combination of their leak, basal and apical potentials, weighted by their respective conductances, $u_p^{eff}(t) \leftarrow \left[ g_l \cdot E_l + g_b \cdot u_p^b(t) + g_a \cdot u_p^a(t) \right] / (g_l + g_b + g_a)$ .

Interneuron steady-state potentials are updated using a convex combination of their leak, basal and nudging potentials, weighted by their respective conductances,

$$u_i^{eff}(t) \leftarrow \left[ g_l \cdot E_l + g_b \cdot u_i^b(t) + g_{nudge} \cdot \breve{u}_p^r(t - \Delta t) \right] / \left( g_l + g_b + g_{nudge} \right)$$

. Multiple operations in this step can be carried out in parallel.

In step 207, potential differentials (one potential differential per neuron) are updated. More specifically, pyramidal and interneuron potential differentials are updated using the difference between their steady-state potentials and the previous values of their somatic potentials, their total conductance and their membrane capacitance. In other words, pyramidal differentials are updated as follows: $\Delta u_p(t) \leftarrow \left[ u_p^{eff}(t) - u_p(t - \Delta t) \right] \cdot (g_l + g_b + g_a) / C_m$ , while the interneuron potential differentials are updated as follows:

$$\boldsymbol{\Delta u}_{\mathrm{i}}(t) \leftarrow \left[\boldsymbol{u}_{\mathrm{i}}^{\mathrm{eff}}(t) - \boldsymbol{u}_{\mathrm{i}}(t - \Delta t)\right] \cdot \left(g_{\mathrm{l}} + g_{\mathrm{b}} + g_{\mathrm{nudge}}\right) / C_{\mathrm{m}}$$

In step 209, somatic potentials (one somatic potential per somatic compartment) are updated. More specifically, pyramidal and interneuron somatic potentials are updated via an Euler step using their previous values and their differentials. In other words, pyramidal somatic potentials are updated as follows: $\boldsymbol{u}_{\mathrm{p}}(t) \leftarrow \boldsymbol{u}_{\mathrm{p}}(t - \Delta t) + \Delta t \, \Delta \boldsymbol{u}_{\mathrm{p}}(t)$, while the interneuron somatic potentials are updated as follows: $\boldsymbol{u}_i(t) \leftarrow \boldsymbol{u}_i(t - \Delta t) + \Delta t \, \Delta \boldsymbol{u}_i(t)$. Multiple operations in this step can be carried out in parallel.

In step 211, prospective potentials (one prospective potential per neuron) are updated. More specifically, pyramidal and interneuron prospective potentials are updated using their somatic potentials, their prospective time constants and their potential differentials. In other words, the pyramidal prospective potentials are updated as follows:

$$\breve{\boldsymbol{u}}_{\mathrm{p}}^{\mathrm{r}}(t) \leftarrow \boldsymbol{u}_{\mathrm{p}}(t) + \boldsymbol{\tau}_{\mathrm{p}}^{\mathrm{r}}(t - \Delta t) \cdot \boldsymbol{\Delta u}_{\mathrm{p}}(t)$$ , while the interneuron prospective potentials are updated as follows:

$$\breve{\boldsymbol{u}}_{\mathrm{i}}^{\mathrm{r}}(t) \leftarrow \boldsymbol{u}_{\mathrm{i}}(t) + \boldsymbol{\tau}_{\mathrm{i}}^{\mathrm{r}}(t - \Delta t) \cdot \boldsymbol{\Delta u}_{\mathrm{i}}(t)$$

In step 213, neuronal outputs (in this example one output signal per neuron) are updated. More specifically, pyramidal and interneuron outputs are updated as nonlinear functions of the prospective potentials. In other words, the pyramidal outputs are updated as follows: $$\boldsymbol{r}_{\mathrm{p}}(t) \leftarrow \boldsymbol{\varphi}\left(\breve{\boldsymbol{u}}_{p}^{\mathrm{r}}(t)\right)$$ , while the interneuron outputs are updated as follows:

$$\boldsymbol{r}_{\mathrm{i}}(t) \leftarrow \boldsymbol{\varphi}\left(\breve{\boldsymbol{u}}_{\mathrm{i}}^{\mathrm{r}}(t)\right)$$ . Multiple operations in this step can be carried out in parallel.

In step 215, synaptic weights (one weight per synapse) are updated. More specifically, forward synaptic weights are updated using their previous values, the pyramidal outputs and the pyramidal basal potentials, $\boldsymbol{W}(t) \leftarrow \boldsymbol{W}(t - \Delta t) +$

$$\Delta t \, \eta_{W} \cdot \left[\boldsymbol{r}_{\mathrm{p}}^{\mathrm{T}}(t) - \boldsymbol{\varphi}\left(\alpha \cdot \boldsymbol{u}_{\mathrm{p}}^{\mathrm{b}}(t)\right)\right] \boldsymbol{r}_{\mathrm{p}}^{\mathrm{T}}(t)$$ . Pyramidal-to-interneuron synaptic weights are updated using their previous values, the pyramidal and interneuron outputs, and the interneuron basal potentials,

$$\boldsymbol{W}_{\mathrm{ip}}(t) \leftarrow \boldsymbol{W}_{\mathrm{ip}}(t - \Delta t) + \Delta t \, \eta_{\mathrm{ip}} \cdot \left[\boldsymbol{r}_{\mathrm{i}}^{\mathrm{T}}(t) - \boldsymbol{\varphi}\left(\alpha \cdot \boldsymbol{u}_{\mathrm{i}}^{\mathrm{b}}(t)\right)\right] \boldsymbol{r}_{\mathrm{p}}^{\mathrm{T}}(t)$$ . Interneuron-to-pyramidal synaptic weights are updated using their previous values, the interneuron outputs and the pyramidal apical potentials, $\boldsymbol{W}_{\mathrm{pi}}(t) \leftarrow$

$$\boldsymbol{W}_{\mathrm{pi}}(t - \Delta t) + \Delta t \, \eta_{\mathrm{pi}} \cdot \left[-\boldsymbol{u}_{\mathrm{p}}^{\mathrm{a}}(t)\right] \boldsymbol{r}_{\mathrm{i}}^{\mathrm{T}}(t)$$

The flowcharts described above have two interpretations - one as an algorithm, the other as dynamical equations for physical systems. The proposed algorithm is suitable to undo neuronal filtering and enable quasi-instantaneous information propagation, and this can be achieved in physical systems that obey our proposed dynamics. The method steps described above may be carried out by suitable circuits or circuitry when the process is implemented in hardware or using hardware for individual steps. However, the method may also be implemented in software using an artificial neural network comprising artificial neurons and artificial synapses. The terms "circuits" and "circuitry" refer to physical electronic components or modules (e.g. hardware), and any software and/or firmware ("code") that may configure the hardware, be executed by the hardware, and or otherwise be associated with the hardware. The circuits may thus be operable (i.e. configured) to carry out or they comprise means for carrying out the required method steps as described above.

Since the proposed hardware implementation combines state-of-the-art computational capabilities with very low power consumption and a high degree of robustness to noise, the teachings of the present invention may be used for a large variety of edge-computing scenarios where energy and power supplies are strongly limited, such as small drones, spacecraft and, in particular, neuroprosthetics and bio-monitoring devices, both implanted and wearable. The products could be chips that can be connected to sensors and learn to perform particular tasks on their output data stream in real-time, such as navigation or diagnostics. It is to be noted that one key problem of existing neuromorphic hardware is the following dilemma: gain speed (often replacing analogue by digital circuits) but sacrifice power efficiency, or reduce the power consumption (using analogue components, especially neurons) at the cost of reducing speed and increasing noise. It is believed that the proposed approach resolves this dilemma and can thus harness the best of both worlds on a mixed-signal substrate (analogue neuron and synapse dynamics, digital communication between neurons).

To summarise the above teachings, the present invention according to one example concerns a method of processing signals in a neural network comprising a set of neurons interconnected by a set of synapses, with each neuron comprising a soma and optionally a set of apical and/or basal dendrites. The method comprises: updating at least one synaptic input signal configured to be received at input nodes of one or more neurons, and/or updating the corresponding basal potential of at least one of the basal dendrites, and/or updating the corresponding apical potential of at least one of the apical dendrites; updating a potential differential for at least one neuron by using the corresponding synaptic input signal, and/or the updated apical potential and/or the updated basal potential; updating the somatic potential of at least one of the somas by using at least the corresponding updated potential differentials; updating the prospective potential of at least one neuron by using at least the corresponding updated somatic potentials and potential differentials; and generating a neuronal output signal for at least one neuron by using the corresponding updated prospective potentials.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. New embodiments may be obtained by combining any of the teachings above.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

**Claims**

1.  A method of processing signals in a neural network (13) comprising a set of neurons (1, 15, 17) interconnected by at least a set of synapses (9), a respective neuron (15) comprising at least a soma (7), the method comprising:

    • updating (101) one or more synaptic input signals configured to be received at one or more input nodes of a respective neuron (15) to obtain updated synaptic input signals, and/or updating (103) a respective basal potential of a respective basal dendrite (3) of a respective neuron to obtain updated basal potentials, and/or updating (103) a respective apical potential of a respective apical dendrite (5) of a respective neuron to obtain updated apical potentials;
    • updating (105) a respective potential differential of the respective neuron (15) to obtain updated potential differentials such that the respective potential differential is updated by using at least a respective updated synaptic input signal, and/or at least a respective updated apical potential of the respective neuron (15), and/or a respective updated basal potential of the respective neuron (15);
    • updating (107) a respective somatic potential of at least one of the somas (7) to obtain updated somatic potentials by using at least a respective updated potential differential of the respective neuron (15) for which the potential differential was updated;
    • updating (109) a respective prospective potential of at least the respective neuron (5) to obtain updated prospective potentials by using at least a respective updated somatic potential and the respective updated potential differential of the respective neuron (15); and
    • generating (113) a respective neuronal output signal for the respective neuron (5) by using at least a respective updated prospective potential of the respective neuron (5).

2.  A method according to claim 1, wherein the one or more synaptic input signals are updated as weighted sums over neuronal output signals received from one or more other neurons in the neural network.

3.  A method according to claim 1 or 2, wherein the method further comprises denoising the one or more synaptic input signals by a denoising mechanism.

4.  A method according to any one of the preceding claims, wherein the apical potentials are updated by either using target values for a set of output neurons of the neural network (13) or by backpropagating neuronal output signals from one or more other neurons, and the basal potentials are updated by using the updated synaptic input signals.

5.  A method according to any one of the preceding claims, wherein the potential differentials are updated by using a filter function $\mathcal{F}$ of at least a previous value of the respective potential differential, and the respective updated apical and basal potentials.

6.  A method according to any one of the preceding claims, wherein the respective somatic potentials are updated via an Euler step using a previous value of the respective somatic potential and the respective updated potential differential.

7. A method according to any one of the preceding claims, wherein the prospective potentials are updated by using an inverse filter function $\mathcal{G}$ of at least the respective updated somatic potential, and the respective updated potential differential.

8. A method according to any one of the preceding claims, wherein the neuronal output signals are updated as a nonlinear function of the respective updated prospective potential.

9. A method according to any one of the preceding claims, wherein the method further comprises updating (111) respective prospective and/or membrane time constants for a subset of neurons (1, 15, 17) by using previous values of the respective prospective and/or membrane time constants, and the difference between the respective updated prospective potential and the sum of the respective updated basal potential and a respective neuronal bias.

10. A method according to any one of the preceding claims, wherein the method further comprises updating (115) synaptic weights and/or neuronal biases by using at least their previous values, and the respective updated apical potential.

11. A method according to any one of the preceding claims, wherein the neural network (13) comprises a cortical microcircuit, wherein the set of neurons (1, 15, 17) comprise a set of pyramidal neurons (15) and a set of interneurons (17), wherein a respective pyramidal neuron (15) consists of a pyramidal basal dendrite (3) receiving one or more bottom-up input signals from one or more hierarchically lower neurons, a pyramidal apical dendrite (5) receiving one or more top-down input signals from one or more hierarchically higher neurons and one or more lateral input signals from one or more interneurons (17), and a pyramidal somatic compartment (7) integrating dendritic information from a respective basal dendrite (3) and a respective apical dendrite (5), and generating the respective neuronal output signal, and wherein a respective interneuron (17) consists of an interneuron basal dendrite (3) receiving one or more input signals from one or more pyramidal neurons (15) in the same layer, and an interneuron somatic compartment (7) receiving one or more input signals from one or more pyramidal neurons (15) in hierarchically higher layers.

12. A method according to claim 11, wherein updating the one or more synaptic input signals comprises updating (201) one or more pyramidal apical synaptic input signals, one or more pyramidal basal synaptic input signals, and one or more interneuron basal synaptic input signals, wherein updating the respective apical potential comprises updating (203) a respective pyramidal apical potential, and updating the respective basal potential comprises updating a respective pyramidal basal potential and a respective interneuron basal potential, and wherein the method further comprises updating (205) a respective pyramidal steady-state potential and a respective interneuron steady-state potential of the respective neuron (15, 17).

13. A method according to claim 11 or 12, wherein updating the respective potential differential comprises updating (207) a respective pyramidal differential and a respective interneuron potential differential, updating the respective somatic potential comprises updating (209) a respective pyramidal somatic potential and a respective interneuron somatic potential, updating the respective prospective potential comprises updating (211) a respective pyramidal prospective potential and a respective interneuron prospective potential, and generating (113) the respective neuronal output signal comprises generating (213) a respective pyramidal neuronal output signal of the respective pyramidal neuron (15) and a respective interneuron neuronal output signal of the respective interneuron (17).

14. A method according to any one of claims 11 to 13, wherein the pyramidal somatic compartments (7) operate as leaky integrators of input from neighbouring compartments.

15. A neural network (13) comprising a set of neurons (1, 15, 17) interconnected by at least a set of synapses (9), a respective neuron (15) comprising at least a soma (7), the neural network (1, 15, 17) comprising means for:

• updating one or more synaptic input signals configured to be received at one or more input nodes of a respective neuron (15) to obtain updated synaptic input signals, and/or updating (103) a respective basal potential of a respective basal dendrite (3) of a respective neuron to obtain updated basal potentials, and/or updating (103) a respective apical potential of a respective apical dendrite (5) of a respective neuron to obtain updated apical potentials;

- updating a respective potential differential of the respective neuron (15) to obtain updated potential differentials such that the respective potential differential is updated by using at least a respective updated synaptic input signal, and/or at least a respective updated apical potential of the respective neuron (15), and/or a respective updated basal potential of the respective neuron (15);
- updating a respective somatic potential of at least one of the somas (7) to obtain updated somatic potentials by using at least a respective updated potential differential of the respective neuron (15) for which the potential differential was updated;
- updating a respective prospective potential of at least the respective neuron (5) to obtain updated prospective potentials by using at least a respective updated somatic potential and the respective updated potential differential of the respective neuron (15); and
- generating a respective neuronal output signal for the respective neuron (5) by using at least a respective updated prospective potential of the respective neuron (5).

**Fig. 1**

**Fig. 2a**

without prospective coding

**Fig. 2b**

Fig. 2c

with prospective coding

Fig. 2d

**Fig. 3**

EP 4 156 026 A1

| Update synaptic inputs as weighted sum over neuronal outputs. | ⟋—101 |

| Update apical potentials either using target values for a set of output neurons or by backpropagating neuronal outputs from all other neurons. Update basal potentials using the synaptic inputs. | ⟋—103 |

| Update potential differentials using a filter function $\mathcal{F}$ of their previous values, the apical and basal potentials and any other neuron parameters. | ⟋—105 |

| Update somatic potentials via an Euler step using their previous values and their differentials. | ⟋—107 |

| Update prospective potentials using an inverse filter function $\mathcal{G}$ of the somatic potentials, their potential differentials and any other neuron parameters. | ⟋—109 |

To Fig. 4b

## Fig. 4a

From Fig. 4a

Update prospective and/or membrane time constants for a subset of neurons using their previous values and the difference between the prospective potentials and the sum of basal potentials and neuronal biases.  — 111

Update neuronal outputs as nonlinear functions of the prospective potentials.  — 113

Update synaptic weights and neuronal biases using their previous values, their local dendritic potentials and their neuron's somatic potentials and/or output.  — 115

End

**Fig. 4b**

Fig. 5

Update pyramidal apical synaptic inputs as weighted sums over pyramidal and interneuron outputs, respectively using backward and interneuron-to-pyramidal synaptic weights.
Update pyramidal basal synaptic inputs as weighted sums over pyramidal outputs using forward synaptic weights.
Update interneuron basal synaptic inputs as weighted sums over pyramidal outputs using pyramidal-to-interneuron synaptic weights.

— 201

Update pyramidal apical potentials either using prospective target values for a set of output neurons or using the pyramidal apical synaptic input otherwise.
Update pyramidal basal potentials using the pyramidal basal synaptic input.
Update interneuron basal potentials using the interneuron basal synaptic input.

— 203

Update pyramidal steady-state potentials using a convex combination of their leak, basal and apical potentials, weighted by their respective conductances.
Update interneuron steady-state potentials using a convex combination of their leak, basal and nudging potentials, weighted by their respective conductances.

— 205

To Fig. 6b

**Fig. 6a**

From Fig. 6a

Update pyramidal and interneuron potential differentials using the difference between their steady-state potentials and the previous values of their somatic potentials, their total conductance and their membrane capacitance.

207

Update pyramidal and interneuron somatic potentials via an Euler step using their previous values and their differentials.

209

Update pyramidal and interneuron prospective potentials using their somatic potentials, their prospective time constants and their potential differentials.

211

Update pyramidal and interneuron outputs as nonlinear functions of the prospective potentials.

213

Update forward synaptic weights using their previous values, the pyramidal outputs and the pyramidal basal potentials.
Update pyramidal-to-interneuron synaptic weights using their previous values, the pyramidal and interneuron outputs, and the interneuron basal potentials.
Update interneuron-to-pyramidal synaptic weights using their previous values, the interneuron outputs and the pyramidal apical potentials.

215

**Fig. 6b**

Europäisches Patentamt

European Patent Office

Office européen des brevets

# EUROPEAN SEARCH REPORT

Application Number

EP 21 19 9018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 340 118 A1 (INTEL CORP [US]) 27 June 2018 (2018-06-27) * abstract; claims 1-15; figures 1-11 * * paragraph [0002] - paragraph [0162] * | 1-15 | INV. G06N3/04 G06N3/08 |
| A | Luczak Artur ET AL: "Neurons learn by predicting future activity", bioRxiv, 24 August 2021 (2021-08-24), XP055896400, DOI: 10.1101/2020.09.25.314211 Retrieved from the Internet: URL:https://www.biorxiv.org/content/10.1101/2020.09.25.314211v3.full.pdf [retrieved on 2022-03-01] * the whole document * | 1-15 | |
| A | ERWANN MARTIN ET AL: "EqSpike: Spike-driven Equilibrium Propagation for Neuromorphic Implementations", ARXIV.ORG, CORNELL UNIVERSITY LIBRARY, 201 OLIN LIBRARY CORNELL UNIVERSITY ITHACA, NY 14853, 15 October 2020 (2020-10-15), XP081859638, * the whole document * | 1-15 | TECHNICAL FIELDS SEARCHED (IPC) G06N |
| A | CONNOR PETER O ' ET AL: "Training a Spiking Neural Network with Equilibrium Propagation", PROCEEDINGS OF THE TWENTY-SECOND INTERNATIONAL CONFERENCE ON ARTIFICIAL INTELLIGENCE AND STATISTICS 2019, vol. 89, 16 April 2019 (2019-04-16), XP055896442, * the whole document * | 1-15 | |

-/--

The present search report has been drawn up for all claims

| Place of search | Date of completion of the search | Examiner |
|---|---|---|
| The Hague | 2 March 2022 | Volkmer, Markus |

page 1 of 2

Europäisches
Patentamt

European
Patent Office

Office européen
des brevets

# EUROPEAN SEARCH REPORT

**Application Number**

EP 21 19 9018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Haider Paul ET AL: "Latent Equilibrium: A unified learning theory for arbitrarily fast computation with arbitrarily slow neurons", , 27 October 2021 (2021-10-27), XP055896301, Retrieved from the Internet: URL:https://arxiv.org/pdf/2110.14549.pdf [retrieved on 2022-03-01] * the whole document * ----- | | |

**TECHNICAL FIELDS SEARCHED (IPC)**

The present search report has been drawn up for all claims

| Place of search | Date of completion of the search | Examiner |
|---|---|---|
| The Hague | 2 March 2022 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 9018

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2022

| Patent document cited in search report | | Publication date | Patent family member(s) | | Publication date |
|---|---|---|---|---|---|
| EP 3340118 | A1 | 27-06-2018 | EP 3340118 | A1 | 27-06-2018 |
| | | | US 2018174040 | A1 | 21-06-2018 |
| | | | US 2021304005 | A1 | 30-09-2021 |

EPO FORM P0459

For more details about this annex : see Official Journal of the European Patent Office, No. 12/82